Europäisches Patentamt

European Patent Office

Office européen des brevets

(19)

(11) Veröffentlichungsnummer : **0 142 611 B1**

(12) **EUROPÄISCHE PATENTSCHRIFT**

(45) Veröffentlichungstag der Patentschrift :
21.01.87

(51) Int. Cl.⁴ : **B 23 B 29/034**

(21) Anmeldenummer : 84108651.5

(22) Anmeldetag : 21.07.84

(54) **Bohrwerkzeug zur Herstellung von Hinterschneidungen in vorgefertigten Bohrungen.**

(30) Priorität : 29.07.83 DE 3327409

(43) Veröffentlichungstag der Anmeldung :
29.05.85 Patentblatt 85/22

(45) Bekanntmachung des Hinweises auf die Patenterteilung : 21.01.87 Patentblatt 87/04

(84) Benannte Vertragsstaaten :
CH DE FR LI

(56) Entgegenhaltungen :
DE-A- 2 928 555
DE-A- 3 111 362
GB-A- 1 111 032

(73) Patentinhaber : **Hawera Probst GmbH + Co.**
**Schützenstrasse 77**
**D-7980 Ravensburg (DE)**

(72) Erfinder : **Peetz, Wolfgang, Dipl.-Ing.**
**Im Kalkofen 51**
**D-7981 Blitzenreute (DE)**
Erfinder : **Klaissle, Siegfried**
**Hegauweg 22**
**D-7981 Schlier/Unterankenreute (DE)**
Erfinder : **Moser, Bernhard**
**Ulrichstrasse 31**
**D-7963 Altshausen (DE)**
Erfinder : **Müller, Norbert, Dipl.-Ing.**
**Segelbacher Strasse 11**
**D-7984 Wolpertswende (DE)**

(74) Vertreter : **Jackisch, Walter, Dipl.-Ing. et al**
**Menzelstrasse 40**
**D-7000 Stuttgart 1 (DE)**

Jouve, 18, rue St-Denis, 75001 Paris, France

**Beschreibung**

Die Erfindung betrifft ein Bohrwerkzeug zur Herstellung von Hinterschneidungen in vorgefertigten Bohrungen nach dem Oberbegriff des Anspruches 1.

Mit diesem bekannten Bohrwerkzeug werden vorgefertigte zylindrische Bohrungen zum formschlüssigen Verankern von Befestigungselementen, wie Aufspreizdübel, mit Hinterschneidungen versehen. Die Antriebswelle ist als elastisch biegbarer Federstahl ausgebildet, der mit einem Befestigungskonus in die Aufnahme einer Bohrmaschine eingespannt wird, mit der die Antriebswelle rotierend angetrieben wird. Zur Herstellung der Hinterschneidung wird während des Bohrvorganges die Antriebswelle mit der Bohrmaschine aus der Achse der zylindrischen Bohrung gebogen und gleichzeitig in Art einer Rührbewegung um die Bohrungsmündung geschwenkt. Dabei wird die Antriebswelle elastisch gebogen, wodurch der Schneidteil die Hinterschneidung in der Bohrung bohrt. Mit diesem Bohrwerkzeug lassen sich aber keine sauberen Hinterschneidungen in der Bohrung anbringen, da die gesamte Bohrmaschine von Hand kreisend bewegt werden muß, um die Hinterschneidung anzubringen. Die Antriebswelle wird bei dieser bekannten Vorrichtung während der kreisenden Bewegung am Rand der Bohrung abgestützt, wodurch er, insbesondere wenn die Bohrung in weichem Material eingebracht ist, ausbrechen kann und dann ein genauer Rundlauf nicht mehr gewährleistet ist.

Der Erfindung liegt die Aufgabe zugrunde, das gattungsgemäße Bohrwerkzeug so auszubilden, daß die Hinterschneidung in der vorgefertigten Bohrung ohne kreisende Bewegung des Drehantriebes und unabhängig von ihm auch in weichem Material genau hergestellt werden kann.

Diese Aufgabe wird bei dem gattungsgemäßen Bohrwerkzeug erfindungsgemäß mit den kennzeichnenden Merkmalen des Anspruches 1 gelöst.

Beim erfindungsgemäßen Bohrwerkzeug wird der Drehantrieb, beispielsweise eine Bohrmaschine, bei der Herstellung der Hinterschneidung nicht kreisend bewegt, so daß die ausgelenkte Antriebswelle in der vorgefertigten Bohrung sehr genau geführt werden kann. Dadurch lassen sich exakt gefertigte Hinterschneidungen herstellen, in denen die Befestigungselemente, wie Spreizdübel und dergleichen, zuverlässig gehalten werden können. Da der Umlaufantrieb für die Antriebswelle bzw. den Schneidteil vom Drehantrieb gesondert ist, läßt sich die Antriebswelle und damit der Schneidteil exakt umlaufend bewegen, so daß jederzeit eine Kontrolle über die Umlaufbewegung des Schneidteiles gegeben ist. Mit dem Auslenkteil läßt sich die Antriebswelle mit dem Schneidteil sehr genau auslenken, weil infolge der Zwangverstellung die Antriebswelle gezielt in die jeweilige Lage gebracht werden kann. Im Bohrwerkzeug ist der Auslenkteil geschützt untergebracht.

Weitere bevorzugte Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen

Figur 1 in schematischer Darstellung ein erfindungsgemäßes Bohrwerkzeug mit einer Antriebswelle in Ausgangsstellung,

Figur 2 das Bohrwerkzeug gemäß Fig. 1 mit ausgelenkter Antriebswelle zur Herstellung einer Hinterschneidung in einer vorgefertigten Bohrung,

Figur 3 eine Ansicht längs der Linie III-III in Fig. 2,

Figur 4 im Axialschnitt ein erfindungsgemäßes Bohrwerkzeug,

Figur 5 einen Schnitt längs der Linie V-V in Fig. 4,

Figur 6 in schematischer Darstellung das an eine Bohrmaschine angeschlossene Bohrwerkzeug mit einer Handhabe, mit der die Antriebswelle ausgelenkt werden kann,

Figur 7 eine Draufsicht auf die Anordnung gemäß Fig. 6 mit verschiedenen Stellungen der Handhabe zur Erzeugung der Umlaufbewegung der ausgelenkten Antriebswelle.

Das in den Zeichnungen dargestellte Bohrwerkzeug dient zur Herstellung von Hinterschneidungen in zylindrischen Bohrungen in Beton oder ähnlichen Werkstoffen zur formschlüssigen Verankerung von Dübeln oder ähnlichen Befestigungselementen. Das Bohrwerkzeug hat eine Antriebswelle 1, die am freien Ende mit einem Schneidteil 2 drehfest verbunden ist. Am anderen Ende ist die Antriebswelle 1 in eine Antriebsmaschine 3 eingespannt, die eine Bohrmaschine sein kann und mit der die Antriebswelle rotierend angetrieben wird. Die Antriebswelle 1 wird im Bereich der Antriebsmaschine 3 durch eine Lagerung 4 radial abgestützt.

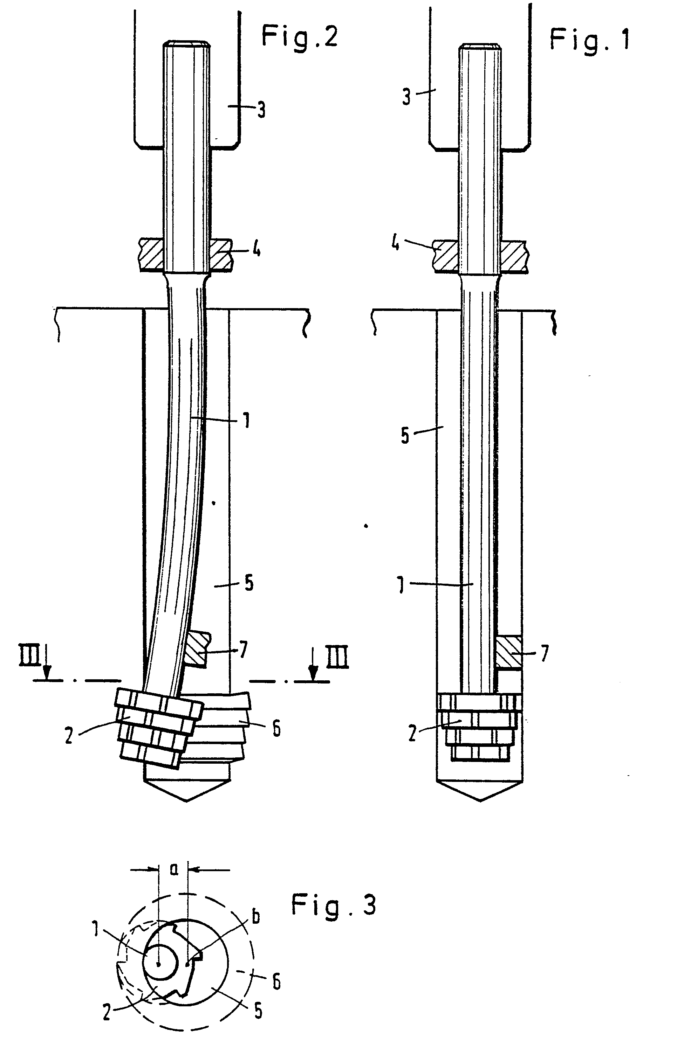

Das Bohrwerkzeug wird mit seinem Schneidteil 2 und der Antriebswelle 1 in der Ausgangslage (Fig. 1) in eine Bohrung 5 eingesetzt. Sie kann eine vorgefertigte Bohrung sein oder, bei entsprechender Ausbildung des Schneidteiles 2, durch diesen beim Vorschub des Bohrwerkzeuges gefertigt worden sein. Zur Herstellung einer Hinterschneidung 6 in der Bohrung 5 wird die Antriebswelle 1 über eine Auslenkeinrichtung 7, die nahe dem Schneidteil 2 an der Antriebswelle angreift, quer zu ihrer Achse ausgelenkt. Der Schneidteil 2 wird dadurch um das Maß a (Fig. 3) zugestellt. Dieses Maß a bestimmt dann die Tiefe der Hinterschneidung 6. In der ausgelenkten Lage wird die Auslenkeinrichtung 7 verriegelt und der Schneidteil 2 um die Achse b (Fig. 3) umlaufend angetrieben. Nach einem Umlauf ist die Hinterschneidung 6 ausgeführt. Die Antriebswelle 1 ist so ausgelegt, daß ihre Auslenkung im elastischen Bereich erfolgt und daß sie nach Entriegelung der Auslenkeinrichtung 7 wieder in ihre Ausgangsstellung gemäß Fig. 1 zurückfedert. Die Antriebswelle 1 kann aber auch so ausgebildet sein, daß sie im Bereich zwischen der Lagerung 4 und dem Schneidteil 2 mit einem Gelenk versehen ist, um das die Antriebswelle beim Auslenken geschwenkt wird.

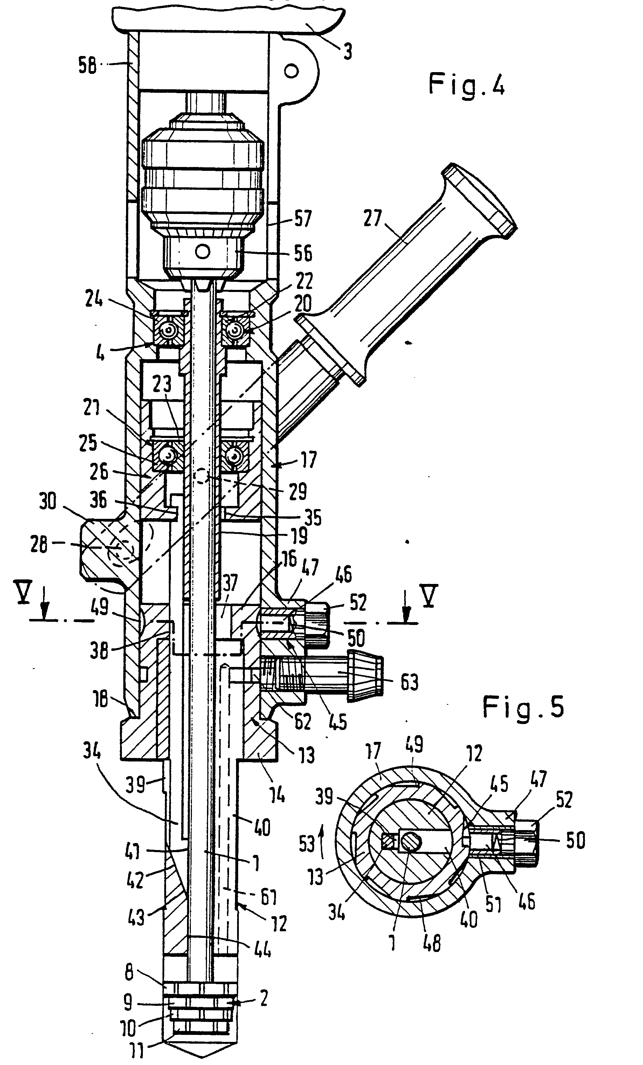

In den Figuren 4 und 5 ist eine bevorzugte Ausführungsform eines Bohrwerkzeuges dargestellt. Die Antriebswelle 1 ist mit dem Schneidteil 2 fest verbunden und als Verschleißteil komplettleicht austauschbar. Durch besondere Ausbildung des Schneidteiles 2 lassen sich verschiedene Hinterschnittformen erzielen. Im Ausführungsbeispiel ist der Schneidteil vorzugsweise aus einzelnen Fräserscheiben 8-11 aus Hartmetall zusammengesetzt. Benachbarte Fräserscheiben können verdreht zueinander angeordnet sein, um eine optimale Anpassung an den jeweiligen Verwendungszweck zu erreichen.

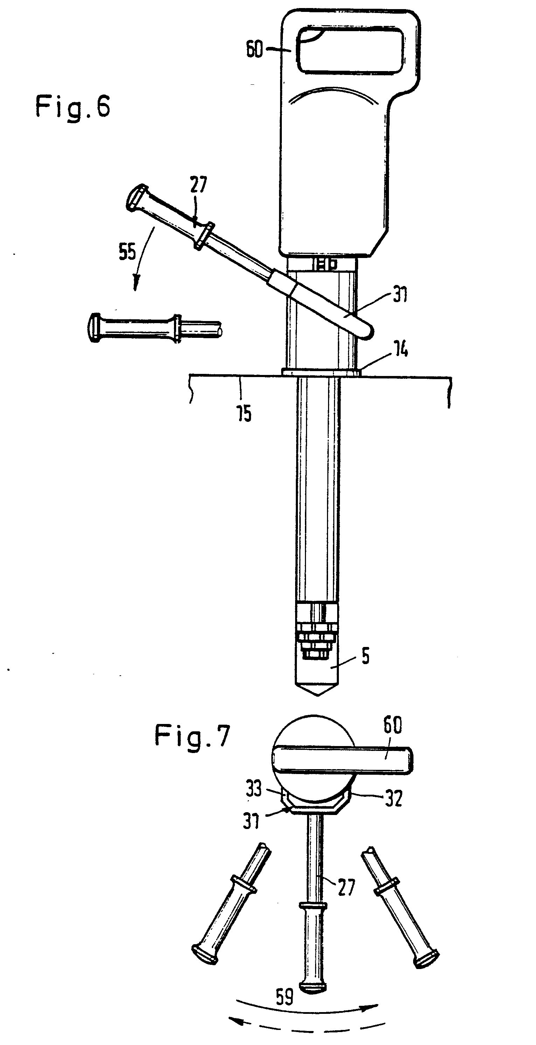

Die Antriebswelle 1 ragt nach unten aus einem Führungsteil 12, mit dem das Bohrwerkzeug in der Bohrung 5 geführt wird. Die Außenabmessungen des Führungsteiles 12 entsprechen den Innenabmessungen der Bohrung 5, so daß der Führungsteil an der Bohrungswandung anliegt und dem Bohrwerkzeug während der Herstellung der Hinterschneidung eine zuverlässige Führung gibt. Der Führungsteil 12 ist hülsenförmig ausgebildet und ragt mit seinem oberen Ende in eine Buchse 13, die an ihrem dem Schneidteil 2 zugewandten Ende mit einem Flansch 14 versehen ist, mit dem das Bohrwerkzeug während des Bohrens auf der die Bohrung 5 enthaltenden Unterlage 15 abgestützt wird (Fig. 6). Der Führungsteil 12 sitzt drehfest in der Buchse 13, die an ihrem dem Flansch 14 gegenüberliegenden Ende mit einem nach innen gerichteten Flansch 16 versehen ist, an dem der Führungsteil 12 mit seiner Stirnseite anliegt.

Die Buchse 13 ihrerseits ist drehbar in einem rohrförmigen Gehäuse 17 des Bohrwerkzeuges untergebracht. Das Gehäuse 17 liegt mit seiner einen Stirnseite 18 auf dem Flansch 14 der Buchse 13 auf. Innerhalb des Gehäuses 17 ist die Buchse 13 in geeigneter Weise axial gesichert.

Die Antriebswelle 1 ragt über die Buchse 13 hinaus (Fig. 4) und wird im Bereich oberhalb der Buchse von einer Hülse 19 umgeben und geführt, die axial gesichert im Gehäuse 17 befestigt ist. Die Hülse 19 endet mit geringem Abstand vom Flansch 16 der Buchse 13.

Die Lagerung 4 der Antriebswelle 1 weist zwei mit axialem Abstand voneinander angeordnete Kugellager 20 und 21 auf, von denen der Innenring 22, 23 auf der Hülse 19 sitzt. Der Außenring 24 des axial oberen Kugellagers 20 ist an der Innenseite des Gehäuses 17 befestigt und axial gesichert. Der Außenring 25 des axial unteren Kugellagers 21 ist an der Innenseite eines buchsenförmigen Verschiebeteiles 26 befestigt, der axial verschiebbar an der Innenwandung des Gehäuses 17 geführt ist und die Hülse 19 mit der Antriebswelle 1 mit Spiel umgibt. Zum Axialverschieben des Verschiebeteiles 26 ist eine Handhabe 27 vorgesehen, die um eine Achse 28 schwenkbar am Gehäuse 17 angelenkt ist. Die Handhabe 27 ist außerdem mit einem Gelenkzapfen 29 mit dem Verschiebeteil 26 verbunden. Durch Verschwenken der Handhabe 27 kann somit über den Gelenkzapfen 29 der Verschiebeteil 26 axial im Gehäuse 17 verschoben werden. Der Gelenkzapfen 29 ist derart an der Handhabe 27 angeordnet, daß trotz der Schwenkbewegung der Handhabe die Axialverschiebung des Verschiebeteiles 26 möglich ist. Das Gehäuse 17 weist im Anlenkbereich der Handhabe 27 einen radial nach außen ragenden Vorsprung 30 auf, in dem die Achse 28 einfach untergebracht werden kann. Die Handhabe 27 kann, wie dies aus Fig. 7 erkennbar ist, an ihrem freien Ende ein Gabelstück 31 aufweisen, dessen Schenkel 32, 33 das Gehäuse 17 an diametral einander gegenüberliegenden Stellen umgreifen.

Außerdem sind bei einer solchen Ausbildung der Handhabe an diametral einander gegenüberliegenden Stellen des Gehäuses 17 bzw. des Verschiebeteiles 26 zwei Gelenkzapfen 29 vorgesehen, die jeweils in einen der beiden Schenkel 32 und 33 eingreifen. Da beim Axialverschieben des Verschiebeteiles 26 der Gelenkzapfen 29 ebenfalls in Axialrichtung verschoben wird, ist das Gehäuse 17 mit einem entsprechend langen Schlitz versehen.

Der Verschiebeteil 26 dient zur Axialverschiebung einer Auslenkstange 34, die mit ihrem einen Ende mit dem Verschiebeteil verbunden ist. Der hülsenförmig ausgebildete Verschiebeteil 26 hat an seinem der Buchse 13 zugewandten Ende einen radial nach innen gerichteten Flansch 35, der Abstand von der Hülse 19 hat und der in eine Aussparung 36 der Auslenkstange 34 passend eingreift. Im Bereich der Hülse 19 liegt die Auslenkstange 34 an der Hülse an. Die Auslenkstange verläuft dann durch die vom Flansch 16 der Buchse 13 begrenzte Öffnung 37, wobei sie an der inneren Stirnseite 38 dieses Flansches anliegt. Der radiale Abstand, in Axialrichtung gesehen, zwischen dieser Innenseite 38 des Flansches 16 und der Außenseite der Hülse 19 entspricht somit der radialen Breite der Auslenkstange 34. Damit die Auslenkstange 34 ihre genaue Einbaulage gegenüber der Antriebswelle 1 behält, hat sie eckigen Querschnitt (Fig. 5) und wird in einer axial verlaufenden Nut 39 im Führungsteil 12 geführt, die in dessen mittleren Bereich radial nach außen offen ist (Fig. 3). Die Nut 39 ist quer zur Achsrichtung des Führungsteiles 12 so ausgebildet, daß die Auslenkstange 34 mit ihren einander gegenüberliegenden Seitenflächen an den Nutwandungen anliegt. Außerdem liegt die Auslenkstange 34 im oberen Bereich am Boden der Nut 39 an, so daß die Auslenkstange zuverlässig innerhalb des Führungsteiles 12 geführt wird. Bei längeren Führungsteilen 12 ist es vorteilhaft, wenn die Nut 39 über die gesamte Länge mit dem Boden versehen ist, so daß die entsprechend lange Auslenkstange 34 zuverlässig abgestützt ist.

Die Nut 39 mündet in radialer Richtung in eine in der Breite größere Nut 40, die bis zur Außenseite des Führungsteiles 12 reicht und durch die die Antriebswelle 1 verläuft. Die Breite der Nut 40 entspricht dem Durchmesser der Antriebswelle 1, so daß sie gegen Querverschieben gesichert ist.

Im Bereich außerhalb der Hülse 19 erstreckt sich die Auslenkstange 34 mit geringem radialen Abstand von der Antriebswelle 1. Am freien Ende ist die Auslenkstange 34 verdickt ausgebildet und weist eine axial verlaufende und an der Antriebswelle 1 anliegende Anlagefläche 41 sowie eine spitzwinklig an diese anschließende Keilfläche 42 auf, mit der sie an einer Keilgegenfläche 43 des Führungsteiles 12 anliegt. Die Keilgegenfläche 43 wird durch eine entsprechende Verdickung an der Innenseite des Führungsteiles 12 nahe dessen freiem Ende gebildet. Die Keilgegenfläche geht in eine Anlagefläche 44 über, die unmittelbar an die Anlagefläche 41 der Auslenkstange 34 anschließt und eine stetige Fortsetzung dieser Anlagefläche bildet. Die Anlagefläche 44 reicht bis zur Stirnseite des Führungsteiles 12, so daß die Antriebswelle 1 in diesem Bereich von den Anlageflächen 44 und 41 über eine verhältnismäßig große axiale Länge abgestützt wird. Die Anlagefläche 44 bildet im Endbereich des Führungsteiles 12 den Boden der Nut 40. Somit wird die Antriebswelle 1 nicht nur durch die Anlageflächen 44, 41, sondern auch durch die Seitenwände der Nut 40 gegen Verschiebungen quer zur Achsrichtung gesichert, wie aus Fig. 5 ersichtlich ist. Die Antriebswelle 1 kann lediglich in einer durch die Radialerstreckung der Nut 40 vorgegebenen Richtung innerhalb der Nut bewegt werden, wie dies unten noch näher erläutert werden soll.

Die Keilgegenfläche 43 bildet eine weitere Abstützung für die Auslenkstange 34 in deren Endbereich, so daß sie einwandfrei über ihre Länge geführt ist.

Die Handhabe 27 dient nicht nur zur Axialverschiebung des Verschiebeteiles 26 und der Auslenkstange 34, sondern auch zum umlaufenden Antrieb der Antriebswelle 1, wenn diese in der noch zu beschreibenden Weise durch die Auslenkstange 34 radial ausgelenkt wird. Mit der Handhabe 27 kann der Umlaufantrieb 45 manuell betätigt werden. Dies hat den Vorteil, daß der Umlauf des Schneidteiles 2 in kontrollierter Weise durchgeführt werden kann. Dadurch läßt sich die Hinterschneidung 6 sehr exakt in der Bohrung 5 herstellen. Mit der Handhabe 27 kann zudem der Umlaufantrieb 45 sehr einfach betätigt werden, so daß die Handhabung des Bohrwerkzeuges einfach ist. Die Handhabe 27 ist mit einem Antriebsglied des Umlaufantriebes 45 antriebsverbunden, so daß durch entsprechende Betätigung der Handhabe der Umlaufantrieb durch einfache Schwenkbewegungen betätigt werden kann. Das Antriebsglied ist vorzugsweise das Gehäuse 17, das drehbar auf der Buchse 13 gelagert ist. Um die Drehbewegung des Gehäuses 17 auf die Antriebswelle 1 und damit auf den Schneidteil 2 zu übertragen, ist im Gehäuse ein Mitnehmer 46 gelagert, der in ein Sperrad 48 eingreift, das mit der Antriebswelle 1 antriebsverbunden ist. Der Mitnehmer 46 ist in einem radial verlaufenden Ansatz 47 des Gehäuses 17 untergebracht. Das Sperrad 48 ist aus herstellungstechnischen Gründen vorzugsweise als Teil der Buchse 13 ausgebildet. Diese weist in Höhe ihres Flansches 16 am Außenumfang Sperrzähne 49 auf, in die der Mitnehmer 46 eingreift.

Der Mitnehmer 46 steht unter der Kraft einer Feder 50, die ihn in Richtung auf seine Eingriffsstellung belastet. Dadurch ist die Antriebsverbindung zwischen dem Gehäuse 17 und der Buchse 13 jederzeit gewährleistet. In die Bohrung 51 des Ansatzes 47, in der der Mitnehmer 46 radial verschiebbar gelagert ist, ist eine Schraube 52 eingesetzt, mit der die vorzugsweise Vorspannung der Druckfeder 50 eingestellt werden kann.

Das Gehäuse 17 mit dem Mitnehmer 46 und das Sperrad 48 bilden den Umlaufantrieb 45 des Bohrwerkzeuges, der als Freilauf, vorzugsweise jedoch als Zahngesperre ausgebildet ist. Mit dem Umlaufantrieb 45 kann die Buchse 3 in Drehrichtung 53 (Fig. 5) gedreht werden.

Zur Herstellung der Hinterschneidung 6 in der Bohrung 5 wird das Bohrwerkzeug in der in den Figuren 1, 4 und 6 dargestellten Lage in die Bohrung eingesetzt. Der Führungsteil 12 stützt das Bohrwerkzeug in der Bohrung 5 ab, so daß das Bohrwerkzeug innerhalb der Bohrung genau ausgerichtet ist. Anschließend wird die Handhabe 27 um die Achse 28 in Richtung des Pfeiles 55 (Fig. 6) nach unten geschwenkt. Dabei wird der Verschiebeteil 26 im Gehäuse 17 nach unten verschoben. Dadurch wird auch die mit dem Verschiebeteil 26 verbundene Auslenkstange 34 nach unten verschoben. Da die Auslenkstange mit ihrer Keilfläche 42 auf der Keilgegenfläche 43 des Führungsteiles 12 aufliegt, wird bei dieser Axialverschiebung die Auslenkstange über diese Keilflächen quer zur Achse der Antriebswelle 1 ausgelenkt. Zu diesem Zweck ist die Auslenkstange 34 zweckmäßig biegeelastisch ausgebildet. Da sich die Auslenkstange an der Innenseite 38 des Flansches 16 sowie am Boden der Nut 39 im Führungsteil 12 sowie mit der Anlagefläche 41 an der Antriebswelle 1 abstützt, wird ein Ausknicken der Auslenkstange bei der Axialverschiebung mittels der Handhabe 27 zuverlässig verhindert. Beim Axialverschieben der Auslenkstange 34 wird die Antriebswelle 1 innerhalb der Nut 40 im Führungsteil 12 ebenfalls radial ausgelenkt, wie dies in Fig. 2 schematisch dargestellt ist. Der Verschiebeteil 26 mit der Auslenkstange 34 bildet die Auslenkvorrichtung 7, mit der sich die Antriebswelle 1 in gewünschtem Maße radial auslenken läßt. Die Axialverschiebung der Auslenkstange 34 kann bei rotierender Antriebswelle 1 durchgeführt werden, so daß der Schneidteil 2 schon zu Beginn des Auslenkvorganges beginnt, die Hinterschneidung 6 in der Wandung der Bohrung 5 zu bohren. Mit zunehmender Axialverstellung wird die Antriebswelle 1 weiter ausgelenkt, bis der Auslenkgrad der gewünschten Tiefe der Hinterschneidung 6 entspricht. Da die Auslenkvorrichtung 7 manuell über die Handhabe 27 betätigt werden kann, läßt sich der Auslenkwinkel der Antriebswelle 1 sehr genau und einfach einstellen, so daß die Tiefe der Hinterschneidung 6 in einfacher Weise exakt eingestellt werden kann. Hierzu können auf der Außenseite des Gehäuses 17 Markierungen angebracht sein, die den Auslenkgrad der Antriebswelle 1 und damit die Tiefe der Hinterschneidung 6 angeben.

Die Anlagefläche 41 der Auslenkstange 34 ist entsprechend dem Radius der Antriebswelle 1 gekrümmt, so daß sie während ihrer Rotation an der Anlagefläche abgestützt ist. Die Antriebswelle 1 wird während ihres Auslenkvorganges an den Seitenwandungen der Nut 40 geführt, so daß sie auch in ausgelenkter Lage in bezug auf den Führungsteil 12 genau positioniert ist. Die Auslenkvorrichtung 7 ist konstruktiv sehr einfach ausgebildet, da zur Auslenkung der Auslenkstange 34 lediglich die Keilflächen 42 und 43 notwendig sind, also keine zusätzlichen Bauteile erforderlich sind. Die biegeelastische Ausbildung der Auslenkstange 34 hat den Vorteil, daß sie beim Zurückschwenken der Handhabe 27 selbsttätig in ihre in Fig. 4 dargestellte Ausgangslage zurückfedert. Da die Auslenkstange 34 während der Axialverschiebung mit der Keilfläche 42 ständig auf der Keilgegenfläche 43 abgestützt ist, kann sie trotz ihrer biegeelastischen Ausbildung die von der Antriebswelle 1 infolge ihrer elastischen Ausbiegung auftretende Rückfederungskraft aufnehmen, ohne daß dadurch die Auslenkung der Antriebswelle beeinträchtigt wird.

Die Handhabe 27 kann bis in die in Fig. 6 dargestellte Endlage verschwenkt werden, in der die Antriebswelle 1 maximal ausgelenkt ist. Zum Drehantrieb der Antriebswelle 1 dient die Antriebsmaschine 3, in deren Spannfutter 56 die Antriebswelle 1 mit ihrem freien Ende eingespannt ist. Zum Betätigen des Spannfutters 26 ist das Gehäuse 17 in diesem Bereich mit Öffnungen 57 versehen, durch die das Spannfutter 56 zugänglich ist. Das Gehäuse 17 ist im Bereich des Spannfutters 56 mit einem Spannhals 58 versehen, mit dem es auf der Antriebsmaschine 3 festgespannt werden kann (vgl. Fig. 4). Über das drehbar angetriebene Spannfutter 56 wird somit die Antriebswelle 1 mit dem Schneidteil 2 und der Hülse 19 rotierend angetrieben. Wenn die Handhabe 27 in Schwenkrichtung 55 in die Endlage verschwenkt worden ist, wird der Umlaufantrieb 45 betätigt. Hierzu wird die Handhabe 27 in Richtung der Pfeile 59 in Fig. 7 hin und her geschwenkt. In der einen Schwenkrichtung nimmt der Mitnehmer 46, der im Ansatz 47 des Gehäuses 17 untergebracht ist, über die Sperrzähne 49 die Buchse 13 mit. Diese Mitnahmestellung des Mitnehmers 46 ist in Fig. 5 dargestellt. Da der Führungsteil 12 drehfest mit der Buchse 13 verbunden ist, wird hierbei auch der Führungsteil in gleicher Drehrichtung mitgenommen. Die in ausgelenkter Lage befindliche Antriebswelle 1 wird über die Seitenwandungen der Nut 40 des Führungsteiles ebenfalls umlaufend mitgenommen. Wenn die Handhabe 27 in der entgegengesetzten Richtung geschwenkt wird, dann ratscht der Mitnehmer 46 über die Sperrzähne 49 hinweg, während die Buchse 13 mit dem Führungsteil 12 und der Antriebswelle 1 stillsteht. Anschließend wird die Handhabe 27 wieder in entgegengesetzter Richtung geschwenkt, wobei die Buchse 13 vom Mitnehmer 46 wieder gedreht wird. Auf diese Weise läßt sich durch ständiges Hin- und Herschwenken der Handhabe 27 der Schneidteil 2 umlaufend antreiben, bis er eine volle Umdrehung gemacht hat und die Hinterschneidung 6 über den gesamten Umfang der Wandung der Bohrung 5 hergestellt ist. Diese Umlaufbewegung erfolgt um die Achse b des Bohrwerkzeuges (Fig. 2). Je nach Auslenkgrad der Antriebswelle 1 und damit des Schneidteiles 2 kann die Tiefe der Hinterschneidung 6 in gewünschtem Maße gefertigt werden. Die maximale Auslenkung des Schneidteiles 2 und der Antriebswelle 1 ist das Maß a gemäß Fig. 2. Da der Schneidteil 2 nicht in einem Durchgang um 360° umlaufend angetrieben werden muß, kann die Bedienungsperson des Bohrwerkzeuges bequem die Hinterschneidung 6 in mehreren Schritten herstellen. Insbesondere läßt sich durch eine solche Verfahrensweise die Hinterschneidung sehr genau fertigen. Auf der Außenseite des Gehäuses 17 kann eine Markierung angebracht sein, anhand der die Bedienungsperson leicht feststellen kann, ob der Schneidteil 2 einen Umlauf von 360° durchgeführt hat. Während des Umlaufes des Schneidteiles 2 wird die Antriebswelle 1 von der Antriebsmaschine 3 aus ständig drehend angetrieben.

Nach Fertigstellung der Hinterschneidung 6 muß die Handhabe 27 lediglich in ihre in Fig. 4 dargestellte Ausgangslage zurück geschwenkt werden. Die Antriebswelle 1 und die Auslenkstange 34 federn hierbei selbsttätig in ihre Ausgangslage gemäß Fig. 4 zurück. Das Bohrwerkzeug kann dann aus der Bohrung 5 herausgezogen werden.

Da die Auslenkstange 34 in jeder Verschiebelage an der Keilgegenfläche 43 des Führungsteiles 12 abgestützt ist, ist die Antriebswelle 1 in ihrer ausgelenkten Lage genau positioniert. In der nach unten geschwenkten Endlage der Handhabe 27 (Fig. 6) wird außerdem der Schneidteil 2 in der ausgelenkten Lage verriegelt, so daß während der Herstellung der Hinterschneidung 6 keine unbeabsichtigte Verstellung der Auslenklage eintreten kann. Die Verriegelung wird dadurch erreicht, daß die Keilfläche 42 über die Keilgegenfläche 43 hinaus verschoben wird, so daß die Auslenkstange 34 mit ihrer Außenseite an der Anlagefläche 44 anliegt.

Durch die feste Verbindung zwischen dem Bohrwerkzeug und der Antriebsmaschine 3 ist über die Handhabe 27 und einen an der Antriebsmaschine vorgesehenen Griff 60 (Fig. 6 und 7) eine sichere zweihändige Bedienung des Bohrwerkzeuges gegeben. In Verbindung mit der schrittweisen Umlaufbewegung des Schneidteiles 2 ist dadurch ein einfaches und zuverlässiges Arbeiten mit dem Bohrwerkzeug sichergestellt.

Zweckmäßig sind der Schneidteil 2, der Führungsteil 12 und die Auslenkstange 34 austauschbar, so daß das Bohrwerkzeug auf einfache Weise zur Herstellung von unterschiedlich gestalteten Hinterschneidungen 6 umgerüstet werden kann.

Damit das im Schneidenbereich anfallende Beton- oder Gesteinsmehl aus der Bohrung 5 einfach entfernt werden kann, ist im Führungsteil 12 wenigstens eine axial verlaufende Absaugbohrung 61 vorgesehen. Sie verläuft vom freien Ende des Führungsteiles 12 aus bis in eine Ringnut 62 in der Buchse 13, in die ein im Ansatz 47 des Gehäuses 17 vorgesehener Absaugstutzen 63 mündet. Da das anfallende Beton- oder Gesteinsmehl unmittelbar hinter dem Schneidteil 2 abgesaugt wird, werden Störungen vermieden und der Verschleiß der bewegten Teile verringert. Dies ist insbesondere beim Arbeiten über Kopf vorteilhaft.

**Patentansprüche**

1. Bohrwerkzeug zur Herstellung von Hinterschneidungen (6) in vorgefertigten Bohrungen (5), mit einem Schneidteil (2), der an einem Ende einer Antriebswelle (1) vorgesehen ist, deren anderes Ende mit einem Drehantrieb (3) zu verbinden ist und die wenigstens im Bereich des Schneidteiles quer zu ihrer Achse auslenkbar ist, dadurch gekennzeichnet, daß im Bohrwerkzeug eine Auslenkvorrichtung (7) mit einem längsverschieblichen Auslenkteil (34) untergebracht ist, mit dem die Antriebswelle (1) zwangsweise in ihre ausgelenkte Lage verstellbar ist, und daß die Antriebswelle (1) mit einem vom Drehantrieb gesonderten Umlaufantrieb (45) gekuppelt ist, mit dem sie in ausgelenkter Lage während ihrer Rotation zur Erzeugung der Hinterschneidung (6) umlaufend antreibbar ist.

2. Bohrwerkzeug nach Anspruch 1, dadurch gekennzeichnet, daß der Umlaufantrieb (45) manuell betätigbar ist.

3. Bohrwerkzeug nach Anspruch 1 oder 2, dadurch gekennzeichnet, daß der Umlaufantrieb (45) mit einer Handhabe (27) betätigbar ist, die an einem Gehäuse (17) des Bohrwerkzeuges angelenkt und mit einem Antriebsglied des Umlaufantriebes (45) antriebsverbunden ist.

4. Bohrwerkzeug nach Anspruch 3, dadurch gekennzeichnet, daß als Umlaufantrieb (45) ein Zahngesperre vorgesehen ist, daß das Antriebsglied das Gehäuse (17) ist, in dem wenigstens ein zweckmäßig in Richtung auf seine Eingriffstellung federbelasteter Mitnehmer (46) gelagert ist, der in ein Sperrad (48) eingreift, das mit der Antriebswelle (1) antriebsverbunden ist und das Teil einer Buchse (13) ist, die drehfest mit einem Führungsteil (12) für die Antriebswelle (1) verbunden ist.

5. Bohrwerkzeug nach Anspruch 4, dadurch gekennzeichnet, daß der Führungsteil (12) hülsenförmig ausgebildet ist und das Bohrwerkzeug in der vorgefertigten Bohrung (5) abstützt und wenigstens einen in Achsrichtung verlaufenden Schlitz (4) für die Auslenkbewegung der Antriebswelle (1) aufweist, und daß vorzugsweise im Führungsteil (12) wenigstens eine Absaugbohrung (61) vorgesehen ist, die zu einem Absaugstutzen (63) führt und unmittelbar im Bereich neben dem Schneidteil (2) mündet.

6. Bohrwerkzeug nach einem der Ansprüche 1 bis 5, dadurch gekennzeichnet, daß die Auslenkvorrichtung (7) manuell, vorzugsweise mittels der Handhabe (27), betätigbar ist.

7. Bohrwerkzeug nach einem der Ansprüche 1 bis 6, dadurch gekennzeichnet, daß die Antriebswelle (1) in der ausgelenkten Lage arretierbar ist.

8. Bohrwerkzeug nach einem der Ansprüche 1 bis 7, dadurch gekennzeichnet, daß der Auslenkteil (34) eine an der Antriebswelle (1) angreifende elastisch biegbare Auslenkstange (34) ist, die mindestens eine Keilfläche (42) aufweist, der eine Keilgegenfläche (43) zugeordnet ist, die am Führungsteil (12) vorgesehen ist.

9. Bohrwerkzeug nach einem der Ansprüche 1 bis 8, dadurch gekennzeichnet, daß der Auslenkteil (34) innerhalb des Führungsteiles (12) axial verschiebbar ist, aus dem Führungsteil (12) ragt und am überstehenden Ende mit einem Verschiebeteil (26) verbunden ist, der im Gehäuse (17) mittels der Handhabe (27) verschiebbar ist.

10. Bohrwerkzeug nach einem der Ansprüche 4 bis 9, dadurch gekennzeichnet, daß die Antriebswelle (1) an ihrem über den Führungsteil (12) ragenden Ende in einer Buchse (19) geführt ist.

**Claims**

1. Drilling tool for making undercuts (6) in predrilled holes (5), with a cutting part (2), said cutting part (2) being provided at one end of a drive shaft (1), the other end of which is to be connected to a rotary drive (3), said drive shaft (1) being defletable transversely with respect to its axis at least in the region of the cutting part, characterized in that accommodated in the drilling tool is a deflecting device (7) with a longitudinally displaceable deflecting part (34) with which the drive shaft (1) can be positively moved into its deflected position, and in that the drive shaft (1) is coupled to a revolving drive (45) separate from the rotary drive, by means of which revolving drive (45) said drive shaft (1), when in its deflected position, is revolvingly drivable during its rotation in order to produce the undercut (6).

2. Drilling tool according to claim 1, characterized in that the revolving drive (45) is manually operable.

3. Drilling tool according to claim 1 or 2, characterized in that the revolving drive (45) is operable by a handle (27), said handle being hinge-mounted on a housing (17) of the drilling tool and having a drive connection to a driving element of the revolving drive (45).

4. Drilling tool according to claim 3, characterized in that a ratchet is provided as the revolving drive (45), in that the driving element is the housing (17), said housing (17) accommodating at least one dog (46), said dog (46) preferably being spring-loaded towards its position of engagement and engaging a ratchet wheel (48), said ratchet wheel (48) having a drive connection to the drive shaft (1) and being part of a bush (13), said bush (13) being rigidly connected to a guiding part (12) for the drive shaft (1).

5. Drilling tool according to claim 4, characterized in that the guiding part (12) is in the form of a sleeve and supports the drilling tool in the predrilled hole (5) and comprises at least one axially extending slot (4) for the deflecting motion of the drive shaft (1), and in that at least one suction hole (61) is provided preferably in the guiding part (12), said suction hole (61) leading to a suction nozzle (63) and joining directly into the region next to the cutting part (2).

6. Drilling tool according to any one of claims 1 to 5, characterized in that the deflecting device (7) is operable manually, preferably by means of the handle (27).

7. Drilling tool according to any one of claims 1 to 6, characterized in that the drive shaft (1) is lockable in the deflected position.

8. Drilling tool according to any one of claims 1 to 7, characterized in that the deflecting part (34) is a flexibly bendable deflecting rod (34), said deflecting rod (34) engaging the drive shaft (1) and comprising at least one wedge face (42), said wedge face (42) having a wedge counterface (43) provided on the guiding part (12).

9. Drilling tool according to any one of claims 1 to 8, characterized in that the deflecting part (34) is axially displaceable inside the guiding part (12), projects out of the guiding part (12) and is connected at the projecting end to a sliding part (26), said sliding part (26) being displaceable in the housing (17) by means of the handle (27).

10. Drilling tool according to any one of claims 4 to 9, characterized in that the drive shaft (1) is guided in a bush (19) at its end projecting beyond the guiding part (12).

**Revendications**

1. Outil de perçage destiné à l'exécution de contre-dépouilles (6) dans des avant-trous (5), et comportant un organe tranchant (2) qui est prévu à l'une des extrémités d'un arbre d'entraînement (1) dont l'autre extrémité est à relier à un mécanisme d'entraînement en rotation (3) et qui peut, au moins dans la région de l'organe tranchant, être dévié transversalement à son axe, caractérisé en ce que dans l'outil de perçage est logé un dispositif déviateur (7) comportant un organe déviateur (34) susceptible de coulisser longitudinalement et au moyen duquel l'arbre d'entraînement (1) peut être amené positivement dans sa position déviée, et en ce que l'arbre d'entraînement (1) est couplé avec un mécanisme de commande de mouvement circulaire (45), séparé du mécanisme d'entraînement en rotation, au moyen duquel l'arbre d'entraînement peut, à l'état dévié, lors de sa rotation être amené à effectuer un mouvement circulaire pour exécuter la contre-dépouille (6).

2. Outil de perçage selon la revendication 1, caractérisé en ce que le mécanisme de commande (45) pour le mouvement circulaire peut être actionné manuellement.

3. Outil de perçage selon la revendication 1 ou 2, caractérisé en ce que le mécanisme de commande (45) pour le mouvement circulaire peut être actionné au moyen d'un organe de manœuvre (27), lequel est articulé sur une enveloppe (17) de l'outil de perçage et est relié à des fins d'entraînement à un organe moteur du mécanisme de commande (45) pour le mouvement circulaire.

4. Outil de perçage selon la revendication 3, caractérisé en ce qu'il est prévu en tant que mécanisme de commande (45) pour le mouvement circulaire un encliquetage, en ce que l'organe moteur est l'enveloppe (17) dans laquelle est monté au moins un doigt de transmission (46) avantageusement sollicité par ressort en direction de sa position de mise en prise et qui vient en prise avec une roue à rochet (48), laquelle est liée, du point de vue de l'entraînement, à l'arbre d'entraînement (1) et fait partie d'un manchon (13) qui est relié de manière fixe en rotation à un organe de guidage (12) pour l'arbre d'entraînement (1).

5. Outil de perçage selon la revendication 4, caractérisé en ce que l'organe de guidage (12) est réalisé sous forme de douille et supporte l'outil de perçage dans l'avant-trou (5) et présente au moins une fente (4), s'étendant en direction axiale, pour le mouvement de déviation de l'arbre d'entraînement (1), et en ce qu'il est prévu de préférence dans l'organe de guidage (12) au moins un trou d'aspiration (61) qui mène à une tubulure d'aspiration (63) et débouche directement dans la région voisine de l'organe tranchant (2).

6. Outil de perçage selon l'une quelconque des revendications précédentes, caractérisé en ce que le dispositif déviateur (7) peut être actionné manuellement, de préférence au moyen de l'organe de manœuvre (27).

7. Outil de perçage selon l'une quelconque des revendications précédentes, caractérisé en ce que l'arbre d'entraînement (1) peut être bloquée dans la position déviée.

8. Outil de perçage selon l'une quelconque des revendications précédentes, caractérisé en ce que l'organe déviateur (34) est une barre déviatrice élastiquement flexible (34) agissant sur l'arbre d'entraînement (1) et qui présente au moins une surface (42) en forme de coin, à laquelle est associée une contre-surface (43) en forme de coin qui est prévue sur l'organe de guidage (12).

9. Outil de perçage selon l'une quelconque des revendications précédentes, caractérisé en ce que l'organe déviateur (34) peut être amené à coulisser axialement à l'intérieur de l'organe de guidage (12), fait saillie au-delà de l'organe de guidage (12) et est reliée au niveau de son extrémité faisant saillie à un élément coulissant (26), lequel peut être amené à coulisser dans l'enveloppe (17) au moyen de l'organe de manœuvre (27).

10. Outil de perçage selon l'une quelconque des revendications 4 à 9, caractérisé en ce que l'arbre d'entraînement (1) est guidé, au niveau de son extrémité faisant saillie au-delà de l'organe de guidage (12), dans une douille (19).

Fig.2

Fig.1

Fig.3

0 142 611

Fig.4

Fig.5

2

**0 142 611**

Fig.6

Fig.7